(19) **Europäisches Patentamt**

**European Patent Office**

**Office européen des brevets**

(11) **EP 0 841 377 B1**

(12) **EUROPÄISCHE PATENTSCHRIFT**

(45) Veröffentlichungstag und Bekanntmachung des Hinweises auf die Patenterteilung:
**19.04.2000 Patentblatt 2000/16**

(51) Int Cl.$^7$: **C08L 83/04**

(21) Anmeldenummer: **97118876.8**

(22) Anmeldetag: **30.10.1997**

(54) **Verwendung vernetzbarer Organopolysiloxanzusammensetzungen als Beschichtungsmassen**

Use of crosslinkable organopolysiloxane compositions as coating agents

Utilisation de compositions réticulables d'organopolysiloxane comme agents de revêtement

(84) Benannte Vertragsstaaten:
**BE DE ES FR GB IT NL**

(30) Priorität: **06.11.1996 DE 19645721**

(43) Veröffentlichungstag der Anmeldung:
**13.05.1998 Patentblatt 1998/20**

(73) Patentinhaber: **Wacker-Chemie GmbH**
**81737 München (DE)**

(72) Erfinder:
• **Müller, Johann**
**84489 Burghausen (DE)**

• **Eller, Adolf**
**84547 Emmerting (DE)**

(74) Vertreter: **Deffner-Lehner, Maria, Dr. et al**
**Wacker-Chemie GmbH,**
**Hanns-Seidel-Platz 4**
**81737 München (DE)**

(56) Entgegenhaltungen:
**EP-A- 0 567 253**          **DE-A- 3 018 079**
**US-A- 5 354 830**

• **PATENT ABSTRACTS OF JAPAN vol. 9, no. 87 (M-372), 17.April 1985 & JP 59 215848 A (SHOWA DENSEN DENRAN), 5.Dezember 1984,**

**Beschreibung**

Die Erfindung betrifft die Verwendung durch Anlagerung von Si-gebundenem Wasserstoff an aliphatische Kohlenstoff-Kohlenstoff-Mehrfachbindung vernetzbarer Organopolysiloxanmassen als Beschichtungsmassen für Silikonkantschuk, Holz und Textilien.

In EP-A-316 696 (Wacker Silicones Co.; ausgegeben am 24.05. 1989) sind kondensationsvernetzbare Organopolysiloxanmassen beschrieben, in denen als zusätzliche Komponente oberflächenbehandeltes Aluminiumhydroxid eingesetzt wird, um die elektrischen Eigenschaften des nach Vernetzung erhaltenen Kautschuks zu verbessern. Des weiteren werden in EP-A-586 153 (General Electric Co.; ausgegeben am 9.3.94) vernetzbare Siloxanmassen offenbart, die zusätzliche Füllstoffe, wie Calciumsilikat, Aluminiumoxid und Keramikkugeln, enthalten, was im Zusammenwirken mit Alkoxysilanen die mechanischen Eigenschaften, insbesondere die Weiterreißfestigkeit, von Silikonkautschuken verbessern soll.JP-A-59215848 beschreibt additionsvernetzende Siliconkautschukmassen, die als Füllstoffe spezielle Chargen von Siliciumdioxid enthalten.

Gegenstand der Erfindung ist die Verwendung vernetzbarer Organopolysiloxanmassen, die

(1) Organopolysiloxane, die SiC-gebundene Reste mit aliphatischen Kohlenstoff-Kohlenstoff-Mehrfachbindungen aufweisen,
(2) Organopolysiloxane mit Si-gebundenen Wasserstoffatomen oder anstelle von (1) und (2)
(3) Organopolysiloxane, die SiC-gebundene Reste mit aliphatischen Kohlenstoff-Kohlenstoff-Mehrfachbindungen und Si-gebundene Wasserstoffatome aufweisen,
(4) die Anlagerung von Si-gebundenem Wasserstoff an aliphatische Mehrfachbindung fördernden Katalysator,
(5) verstärkenden Füllstoff,
(6) nicht verstärkenden Füllstoff mit einem mittleren Teilchendurchmesser von weniger als 20 $\mu$m und einer BET-Oberfläche von weniger als 20 m$^2$/g

sowie gegebenenfalls weitere Stoffe enthalten.

Handelt es sich bei der erfindungsgemäß verwendeten Masse um eine 2-Komponenten-Siliconkautschukmasse, so können die beiden Komponenten der erfindungsgemäß verwendeten Siliconkautschukmassen alle Bestandteile in beliebiger Kombination enthalten, mit der Maßgabe, daß eine Komponente nicht gleichzeitig Siloxane mit aliphatischer Mehrfachbindung, Siloxane mit Si-gebundenem Wasserstoff und Katalysator, also im wesentlichen nicht gleichzeitig die Bestandteile (1), (2) und (4) bzw. (3) und (4), enthält.

Im Rahmen der vorliegenden Erfindung sollen von dem Begriff Organopolysiloxane sowohl polymere, oligomere wie auch dimere Siloxane mitumfaßt werden.

Die erfindungsgemäß verwendeten Organopolysiloxanmassen haben einen Gehalt an organischem Lösungsmittel von vorzugsweise maximal 3 Gewichtsprozent, besonders bevorzugt maximal 2 Gewichtsprozent, wobei die Massen insbesondere frei von organischem Lösungsmittel sind.

Die in den erfindungsgemäß verwendeten Massen eingesetzten Siloxane (1) und (2) bzw. (3) werden bekanntermaßen so gewählt, daß eine Vernetzung möglich ist. So weist beispielsweise Siloxan (1) mindestens zwei aliphatisch ungesättigte Reste auf und Siloxan (2) mindestens drei Si-gebundene Wasserstoffatome, oder Siloxan (1) weist mindestens drei aliphatisch ungesättigte Reste auf und Siloxan (2) mindestens zwei Si-gebundene Wasserstoffatome, oder aber anstelle von Siloxan (1) und (2) wird Siloxan (3) eingesetzt, welches aliphatisch ungesättigte Reste und Si-gebundene Wasserstoffatome in den obengenannten Verhältnissen aufweist.

Als Organopolysiloxane (1), die SiC-gebundene Reste mit aliphatischen Kohlenstoff-Kohlenstoff-Mehrfachbindungen aufweisen, werden vorzugsweise lineare oder verzweigte Organopolysiloxane aus Einheiten der Formel

$$R_a R^1_b SiO_{\frac{4-a-b}{2}} \qquad (I)$$

eingesetzt, wobei

R einen einwertigen, von aliphatischen Kohlenstoff-Kohlenstoff-Mehrfachbindungen freien, SiC-gebundenen, gegebenenfalls substituierten Kohlenwasserstoffrest mit 1 bis 18 Kohlenstoffatomen bedeutet,
R$^1$ einen einwertigen, SiC-gebundenen Kohlenwasserstoffrest mit aliphatischer Kohlenstoff-Kohlenstoff-Mehrfachbindung bedeutet,
a 0, 1, 2 oder 3 ist und
b 0, 1 oder 2 ist

mit der Maßgabe, daß die Summe a + b kleiner oder gleich 3 ist und mindestens 2 Reste $R^1$ je Molekül vorliegen.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest, Cycloalkylreste, wie Cyclopentyl-, Cyclohexyl-, Cycloheptyl- und Methylcyclohexylreste, Arylreste, wie der Phenyl-, Naphthyl-, Anthryl- und Phenanthrylrest, Alkarylreste, wie o-, m-, p-Tolylreste, Xylylreste und Ethylphenylreste, und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2', 2'-Hexafluorisopropylrest, der Heptafluorisopropylrest, und Halogenarylreste, wie der o-, m- und p-Chlorphenylrest.

Bevorzugt handelt es sich bei Rest R um einen einwertigen, von aliphatischen Kohlenstoff-Kohlenstoff-Mehrfachbindungen freien, SiC-gebundenen Kohlenwasserstoffrest mit 1 bis 6 Kohlenstoffatomen, wobei der Methylrest besonders bevorzugt ist.

Beispiele für Reste $R^1$ sind Alkenylreste, wie der Vinyl-, 5-Hexenyl-, Cyclohexenyl-, 1-Propenyl-, Allyl-, 3-Butenyl- und 4-Pentenylrest, und Alkinylreste, wie der Ethinyl-, Propargyl- und 1-Propinylrest.

Bevorzugt handelt es sich bei Rest $R^1$ um Alkenylreste, wobei der Vinylrest besonders bevorzugt ist.

Besonders bevorzugt handelt es sich bei den erfindungsgemäß eingesetzten Siloxanen (1) um solche der Formel

$$R^1{}_x SiR_{3-x} O(SiR_2O)_n (SiR^1RO)_m SiR_{3-x}R^1{}_x \tag{II},$$

wobei R und $R^1$ die oben dafür angegebene Bedeutung haben,

x 0, 1, 2 oder 3, bevorzugt 1, bedeutet,
m 0 oder eine Zahl von 1 bis 50 ist und
n eine Zahl von 50 bis 100 000 ist,

mit der Maßgabe, daß die Siloxane der Formel (II) pro Molekül mindestens zwei Reste $R^1$ aufweisen und die n Einheiten $(SiR_2O)$ sowie die m Einheiten $(SiR^1RO)$ beliebig, beispielsweise als Block oder statistisch, im Molekül verteilt sein können.

Die Organopolysiloxane (1) besitzen vorzugsweise eine durchschnittliche Viskosität von 100 bis 200 000 $mm^2/s$, besonders bevorzugt von 200 bis 100 000 $mm^2/s$, jeweils bei 25°C.

Die erfindungsgemäß verwendeten Massen enthalten Siloxan (1) in Mengen von vorzugsweise 10 bis 80 Gewichtsprozent, besonders bevorzugt 15 bis 60 Gewichtsprozent.

Als Organopolysiloxane (2), die Si-gebundene Wasserstoffatome aufweisen, werden vorzugsweise lineare, cyclische oder verzweigte Organopolysiloxane aus Einheiten der Formel

$$R^2{}_g H_f SiO_{\frac{4-g-f}{2}} \tag{III}$$

eingesetzt, wobei

$R^2$ die oben für Rest R angegebene Bedeutung hat,
g 0, 1, 2 oder 3 ist und
f 0, 1 oder 2 ist,

mit der Maßgabe, daß die Summe von g + f kleiner oder gleich 3 ist und mindestens 3 Si-gebundene Wasserstoffatome je Molekül vorliegen.

Beispiele für Rest $R^2$ sind die für R angegebenen Beispiele, wobei Alkylreste mit 1 bis 6 Kohlenstoffatomen bevorzugt und der Methyl- und Phenylrest besonders bevorzugt sind.

In den Siloxanen aus Einheiten der Formel (III) können die Si-gebundenen Wasserstoff aufweisenden Einheiten im Block angeordnet oder statistisch verteilt sein.

Vorzugsweise enthält das erfindungsgemäß eingesetzte Organopolysiloxan (2) Si-gebundenen Wasserstoff im Bereich von 0,01 bis 1,5 Gewichtsprozent, besonders bevorzugt 0,05 bis 1,5 Gewichtsprozent, bezogen auf das Gesamtgewicht des Organopolysiloxans (2).

Die Organopolysiloxane (2) besitzen eine durchschnittliche Viskosität von vorzugsweise 20 bis 50 000 $mm^2/$

s, besonders bevorzugt 40 bis 5 000 mm$^2$/s, jeweils bei 25°C.

Besonders bevorzugt handelt es sich bei den erfindungsgemäß eingesetzten Siloxanen (2) um im wesentlichen lineare Siloxane mit einer Kettenlänge von maximal 1 000 Siloxan-Einheiten.

Die erfindungsgemäß verwendeten Massen enthalten Siloxan (2) in Mengen von vorzugsweise 0,2 bis 30 Gewichtsprozent, besonders bevorzugt 0,5 bis 20 Gewichtsprozent, insbesondere von 1 bis 10 Gewichtsprozent.

Die erfindungsgemäß eingesetzten Siloxane (1) und (2) sind handelsübliche Produkte bzw. nach in der Chemie gängigen Verfahren herstellbar.

Anstelle von Organopolysiloxanen (1) und (2) können die erfindungsgemäß verwendeten Massen Organopolysiloxane (3), die aliphatische Kohlenstoff-Kohlenstoff-Mehrfachbindungen und Si-gebundene Wasserstoffatome aufweisen, enthalten, was jedoch nicht bevorzugt ist.

Falls Siloxane (3) eingesetzt werden, handelt es sich vorzugsweise um solche aus Einheiten der Formel

$$R_c SiO_{\frac{4-c}{2}} \, , \, R_d R^1 SiO_{\frac{3-d}{2}} \text{ und } R_e H\,SiO_{\frac{3-e}{2}}$$

wobei R und R$^1$ die oben dafür angegebene Bedeutung haben,

c 0, 1, 2 oder 3,
d 0, 1 oder 2 und
e 0, 1 oder 2 ist,

mit der Maßgabe, daß je Molekül mindestens 2 Reste R$^1$ und mindestens 3 Si-gebundene Wasserstoffatome oder mindestens 3 Reste R$^1$ und mindestens 2 Si-gebundene Wasserstoffatome vorliegen.

Beispiele für Organopolysiloxane (3) sind solche aus $SiO_{4/2}$-, $R_3SiO_{1/2}$-, $R_2R^1SiO_{1/2}$- und $R_2HSiO_{1/2}$-Einheiten, sogenannte MQ-Harze, wobei diese Harze zusätzlich $RSiO_{3/2}$- und $R_2SiO$-Einheiten enthalten können und R wie R$^1$ die obengenannte Bedeutung haben.

Die Organopolysiloxane (3) besitzen vorzugsweise eine durchschnittliche Viskosität von 10 bis 100 000 mm$^2$/s bei 25°C bzw. sind Feststoffe mit Molekulargewichten von 5 000 bis 50 000 g/mol.

Organopolysiloxane (3) sind nach in der Chemie gängigen Methoden herstellbar.

Als die Anlagerung von Si-gebundenem Wasserstoff an aliphatische Mehrfachbindung fördernder Katalysator (4) können die gleichen Katalysatoren verwendet werden, die auch bei den bisher bekannten durch Anlagerung von Si-gebundenem Wasserstoff an aliphatische Kohlenstoff-Kohlenstoff-Mehrfachbindung vernetzbaren Massen zur Förderung der Vernetzung eingesetzt werden konnten.

Beispiele für Katalysatoren (4) sind metallisches und feinverteiltes Platin (Platinsol), Ruthenium, Rhodium, Palladium und Iridium, wobei sich diese Metalle auch auf festen Trägern, wie Siliciumdioxid, Aluminiumoxid, Aktivkohle, keramischen Materialien oder Mischoxiden bzw. Mischhydroxiden, aufgebracht sein können, was aber nicht bevorzugt ist.

Weitere Beispiele für Katalysatoren (4) sind Verbindungen oder Komplexe dieser Metalle, wie Platinhalogenide, z.B. $PtCl_4$, $H_2PtCl_6 \cdot 6H_2O$, $Na_2PtCl_4 \cdot 4H_2O$, Platin-Olefin-Komplexe, Platin-Alkohol-Komplexe, wie etwa der sogenannte Speyers Catalyst, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6 \cdot 6H_2O$ und Cyclohexanon, Platin-Vinylsiloxankomplexe, insbesondere Platin-1,3-Divinyl-1,1,3,3-tetramethyldisiloxankomplexe mit oder ohne Gehalt an organisch gebundenem Halogen, Bis-(y-picolin)-platindichlorid, Trimethylendipyridinplatindichlorid, Dicyclopentadienplatindichlorid, Dimethylsulfoxidethylenplatin-(II)-dichlorid, Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin, Cyclooctadien-Platindichlorid und Norbornadien-Platindichlorid, sowie Ammonium-Platinkomplexe.

In den erfindungsgemäß verwendeten Massen werden als Katalysatoren (4) vorzugsweise Platinmetalle oder deren Verbindungen bzw. Komplexe, insbesondere Platinverbindungen bzw. -komplexe, eingesetzt.

Katalysatoren (4) werden in solchen Mengen eingesetzt, daß ein Platingehalt von vorzugsweise 0,5 bis 500 Gewichts-ppm (= Gewichtsteile je Million Gewichtsteile), insbesondere 3 bis 300 Gewichts-ppm, jeweils bezogen auf das Gesamtgewicht der erfindungsgemäßen Masse, resultiert.

Die erfindungsgemäß eingesetzten verstärkenden Füllstoffe (5) weisen eine BET-Oberfläche von mehr als 50 m$^2$/g, bevorzugt von mehr als 100 m$^2$/g, insbesondere von mehr als 150 m$^2$/g, auf.

Beispiele für die erfindungsgemäß eingesetzten verstärkenden Füllstoffe (5) sind pyrogen hergestellte Kieselsäure, gefällte Kieselsäure oder Silicium-Aluminium-Mischoxide mit einer BET-Oberfläche von mehr als 50 m$^2$/g. Die genannten Füllstoffe können hydrophobiert sein, beispielsweise durch Behandlung mit Organosilanen oder -siloxanen oder durch Veretherung von Hydroxylgruppen zu Alkoxygruppen.

Bevorzugt handelt es sich bei den erfindungsgemäß eingesetzten verstärkenden Füllstoffen (5) um pyrogen hergestellte Kieselsäuren mit einer BET-Oberfläche von mehr als 100 m²/g, wobei pyrogen hergestellte Kieselsäuren mit einer BET-Oberfläche von mehr als 150 m²/g besonders bevorzugt sind.

Die erfindungsgemäß verwendeten Massen enthalten verstärkende Füllstoffe (5) in Mengen von vorzugsweise 5 bis 50 Gewichtsprozent, besonders bevorzugt 5 bis 40 Gewichtsprozent, insbesondere 5 bis 20 Gewichtsprozent.

Beispiele für die erfindungsgemäß eingesetzten nicht verstärkenden Füllstoffe (6) sind Pulver aus Quarz, Cristobalit, Diatomeenerde, Calciumsilikat, Zirkoniumsilikat, Montmorillonite, wie Bentonite, Zeolithe einschließlich der Molekularsiebe, wie Natriumaluminiumsilikat, Metalloxide, wie Aluminium- oder Zinkoxid bzw. deren Mischoxide, Metallhydroxide, wie Aluminiumhydroxid, Bariumsulfat, Calciumcarbonat, Gips, Glas oder Kunststoffe mit einer BET-Oberfläche von weniger als 30 m²/g und einem mittleren Teilchendurchmesser von weniger als 30 µm, wobei Metalloxide, Silikate, Metallhydroxide sowie Carbonate bevorzugt und Aluminiumoxid, Aluminiumhydroxid und Quarzpulver besonders bevorzugt sind.

Der mittlere Teilchendurchmesser der erfindungsgemäß eingesetzten nicht verstärkenden Füllstoffe (6) beträgt weniger als 20 µm, besonders bevorzugt 0,1 bis 20 µm.

Die BET-Oberfläche der erfindungsgemäß eingesetzten nicht verstärkenden Füllstoffe (6) beträgt weniger als 20 m²/g, besonders bevorzugt 2 bis 20 m²/g.

Die erfindungsgemäß verwendeten Massen enthalten nicht verstärkende Füllstoffe (6) in Mengen von vorzugsweise 10 bis 80 Gewichtsprozent, besonders bevorzugt 20 bis 70 Gewichtsprozent, insbesondere 30 bis 70 Gewichtsprozent.

In den erfindungsgemäß verwendeten Massen beträgt das Gewichtsverhältnis von nicht verstärkendem Füllstoff (6) zu verstärkendem Füllstoff (5) vorzugsweise 20:1 bis 2:1, besonders bevorzugt 12:1 bis 4:1.

Nicht verstärkender Füllstoff (6) und verstärkender Füllstoff (5) sind handelsübliche Produkte.

Die erfindungsgemäß verwendeten Massen können, falls erwünscht, weitere Stoffe enthalten, die auch bisher in durch Anlagerung von Si-gebundenem Wasserstoff an aliphatische Mehrfachbindung vernetzbaren Massen verwendet wurden, wie beispielsweise Inhibitoren (7), Haftvermittler (8), andere Siloxane (9) als Siloxan (1), (2) oder (3) und Additive (10).

Beispiele für Inhibitoren (7) sind vinylgruppenhaltige Siloxane, wie etwa 1,3-Divinyl-1,1,3,3-tetramethyldisiloxan, Benzotriazol, Dialkylformamide, Alkylthioharnstoffe, Methylethylketoxim, organische und siliciumorganische Verbindungen mit einem Siedepunkt von mindestens 25°C bei 1012 hPa und mindestens einer aliphatischen Dreifachbindung, wie 1-Ethinylcyclohexan-1-ol, 3-Methyl-1-butin-3-ol, 3-Methyl-1-pentin-3-ol, 2,5-Dimethyl-3-hexin-2,5-diol und 3,5-Dimethyl-1-hexin-3-ol, eine Mischung aus Diallylmaleinat und Vinylacetat sowie Maleinsäuremonoester. Bevorzugt handelt es sich bei dem gegebenenfalls eingesetzten Inhibitor (7) um organische Alkinole und vinylgruppenhaltige Siloxane, wobei 1-Ethinylcyclohexanol, 3-Methyl-1-butin-3-ol und vinylgruppenhaltige Disiloxane besonders bevorzugt sind.

Die erfindungsgemäß verwendeten Massen enthalten vorzugsweise Inhibitor (7), wobei es sich dabei um Mengen von vorzugsweise 0,01 bis 3 Gewichtsprozent, besonders bevorzugt 0,05 bis 2 Gewichtsprozent, bezogen auf die erfindungsgemäße Masse, handelt.

Beispiele für gegebenenfalls eingesetzten Haftvermittler (8) sind Silane mit hydrolysierbaren Gruppen und SiC-gebundenen Vinyl-, Acryloxy-, Methacryloxy-, Epoxy-, Säureanhydrid-, Säure-, Ester- oder Ethergruppen sowie deren Teil- und Mischhydrolysate, wobei Silane mit Vinylgruppen und Silane mit Epoxygruppen, die als hydrolysierbare Reste Ethoxy- oder Acetoxygruppen enthalten, bevorzugt und Vinyltriethoxysilan, Vinyltriacetoxysilan, Epoxypropyltriethoxysilan bzw. deren Teil- und Mischhydrolysate besonders bevorzugt sind.

Die erfindungsgemäß verwendeten Massen enthalten Haftvermittler (8) in Mengen von vorzugsweise 0 bis 5 Gewichtprozent, besonders bevorzugt 1 bis 3 Gewichtsprozent.

Beispiele für gegebenenfalls eingesetzte Siloxane (9) sind Organopolysiloxane aus Einheiten der Formel (I) oder der Formel (II) mit keinen oder pro Molekül weniger als zwei aliphatisch ungesättigten Resten, Organopolysiloxane aus Einheiten der Formel (III) mit keinen oder pro Molekül weniger als drei Si-gebundenen Wasserstoffatomen, MT-Harze der Formel $(R^3{}_3SiO_{1/2})_y(R^3SiO_{3/2})_z$ und MQ-Harze der Formel $(R^3{}_3SiO_{1/2})_y(SiO_{4/2})_z$, wobei $R^3$ eine für Rest R oder für $R^1$ angegebene Bedeutung hat und das Verhältnis von y:z so gewählt werden kann, daß bei Raumtemperatur flüssige oder feste Harze vorliegen.

Die erfindungsgemäß verwendeten Massen enthalten Siloxan (9) in Mengen von vorzugsweise 0 bis 60 Gewichtsprozent, besonders bevorzugt 0 bis 40 Gewichtsprozent.

Beispiele für die gegebenenfalls eingesetzten Additive (10) sind lösliche Farbstoffe, anorganische oder organische Pigmente, Stabilisatoren, wie UV-Stabilisatoren, Radikalfänger und UV-Blocker, sofern diese keine die Anlagerung von Si-gebundenem Wasserstoff an aliphatische Mehrfachbindung inhibierende Gruppen enthalten bzw. keine Komplexbildner für die als Katalysatoren (4) eingesetzten Metalle sind.

Art und Menge der gegebenenfalls einzusetzenden Additive (10) richten sich im wesentlichen nach dem Anforderungsprofil der erfindungsgemäßen Massen bzw. der daraus entstehenden Vulkanisate und sind in der Fachwelt bekannt.

Vorzugsweise enthalten die erfindungsgemäß verwendeten Massen keine über die Komponenten (1) bis (10) hinausgehenden Bestandteile.

Bei den erfindungsgemäß eingesetzten Komponenten (1) bis (10) kann es sich jeweils um eine einzelne Art einer solchen Komponente, wie auch um ein Gemisch aus mindestens zwei verschiedenen Arten einer solchen Komponente handeln.

Die erfindungsgemäß verwendeten Massen haben eine Viskosität von vorzugsweise kleiner 300 000 mm$^2$/s, besonders bevorzugt von 50 bis 200 000 mm$^2$/s.

Bevorzugt handelt es sich bei den erfindungsgemäß verwendeten Massen um solche, die

(1) Organopolysiloxane, die SiC-gebundene Reste mit aliphatischen Kohlenstoff-Kohlenstoff-Mehrfachbindungen aufweisen, aus Einheiten der Formel (I), mit der Maßgabe, daß die Summe a + b kleiner oder gleich 3 ist und mindestens 2 Reste R$^1$ je Molekül vorliegen,

(2) Organopolysiloxane, die Si-gebundene Wasserstoffatome aufweisen, aus Einheiten der Formel (III), mit der Maßgabe, daß die Summe von g + f kleiner oder gleich 3 ist und mindestens 3 Si-gebundene Wasserstoffatome je Molekül vorliegen,

(4) Platinmetalle oder deren Verbindungen bzw. Komplexe,

(5) verstärkenden Füllstoff mit einer BET-Oberfläche von mehr als 50 m$^2$/g ,

(6) nicht verstärkenden Füllstoff mit einem mittleren Teilchendurchmesser von weniger als 20 $\mu$m und einer BET-Oberfläche von weniger als 20 m$^2$/g sowie

(7) Inhibitor enthalten.

Besonders bevorzugt handelt es sich bei den erfindungsgemäß verwendeten Massen um solche, die

(1) 10 bis 80 Gewichtsprozent Organopolysiloxane, die SiC-gebundene Reste mit aliphatischen Kohlenstoff-Kohlenstoff-Mehrfachbindungen aufweisen, der Formel (II), mit der Maßgabe, daß mindestens 2 Reste R$^1$ je Molekül vorliegen,

(2) 0,5 bis 20 Gewichtsprozent Organopolysiloxane, die Si-gebundene Wasserstoffatome aufweisen, aus Einheiten der Formel (III), mit der Maßgabe, daß die Summe von g + f kleiner oder gleich 3 ist und mindestens 3 Si-gebundene Wasserstoffatome je Molekül vorliegen,

(4) Platinmetalle oder deren Verbindungen bzw. Komplexe in solchen Mengen, daß ein Platingehalt von vorzugsweise 0,5 bis 500 Gewichts-ppm (= Gewichtsteile je Million Gewichtsteile), bezogen auf das Gesamtgewicht der erfindungsgemäßen Masse, resultiert,

(5) 5 bis 50 Gewichtsprozent verstärkenden Füllstoff mit einer BET-Oberfläche von mehr als 50 m$^2$/g ,

(6) 10 bis 80 Gewichtsprozent nicht verstärkenden Füllstoff mit einem mittleren Teilchendurchmesser von weniger als 20 $\mu$m und einer BET-Oberfläche von weniger als 20 m$^2$/g sowie

(7) 0,01 bis 3 Gewichtsprozent Inhibitor enthalten.

Die Herstellung der erfindungsgemäß verwendeten Massen kann nach bekannten Verfahren, wie beispielsweise durch einfaches Mischen der einzelnen Komponenten, erfolgen.

Die erfindungsgemäß verwendeten durch Anlagern von Si-gebundenem Wasserstoff an aliphatische Mehrfachbindung vernetzbaren Massen können unter den gleichen Bedingungen vernetzen gelassen werden, wie die bisher bekannten durch Hydrosilylierungsreaktion vernetzbaren Massen. Es handelt sich dabei um Temperaturen von 20 bis 280°C, insbesondere 20 bis 200°C, und einem Druck von 900 bis 1100 hPa. Es können aber auch höhere oder Drücke angewendet werden.

Mit den erfindungsgemäß verwendeten Massen können die unterschiedlichsten Substrate, nämlich Silikonkautschuk, Holz, und Textilien, beschichtet werden. Beispiele für textile Substrate, die bevorzugt mit den Massen beschichtet werden können, sind Gewebe, Gestricke, Vliese, Geflechte und Gewirke aus Natur- und/oder Kunstfasern, wie Baumwolle, Polyamid, Polyester, Polyethylen, Polypropylen, Polyurethan, Seide und Viskose. Eingesetzt werden können die erfindungsgemäß beschichteten Textilien z.B. als Elektroisolierdecken, Elektroisolierschläuche, Thermoisolierungen, Elektroisolierungen, Sportkleidung, Sportartikel, wie Segel, Bootsabdeckungen, Rucksäcke, Zelte und Schutzkleidung, Abdeckplanen, Förderbänder, Kompensatoren, faltbare Behälter, aufblasbare Textilbehälter, Markisen oder textile Architektur.

Das Aufbringen der erfindungsgemäß verwendeten Masse kann in üblicher Weise erfolgen, wie beispielsweise durch Streichen, Gießen, Sprühen, Walzen, Drucken, Rakeln, Pflatschen, Tauchen, Siebdruck, durch Auftrag mit einem sog. Meyer-Stab oder mit einer Luftbürste. Nach dem Aufbringen der erfindungsgemäß verwendeten Masse wird das beschichtete Substrat vorzugsweise erhöhter Temperatur, wie etwa zwischen 20 und 280°C, für eine Verweildauer von vorzugsweise 10 bis 600 Sekunden ausgesetzt. Dies kann kontinuierlich oder diskontinuierlich in entsprechenden Wärmeöfen geschehen. Die Energie kann dabei in Form von Heißluft, Strahlung, Wärmeüberträgern oder durch direkten Kontakt mit heißen Substraten erfolgen.

Gegenstand der vorliegenden Erfindung ist somit ein Verfahren zur Herstellung von Beschichtungen, dadurch gekennzeichnet, daß die erfindungsgemäß verwendete Masse auf das Substrat aufgetragen und bei einer Temperatur zwischen 20 und 280°C vernetzen gelassen wird.

Die erfindungsgemäß verwendeten vernetzbaren Massen haben den Vorteil, daß sie nach der Vernetzung Vulkanisate mit grifftrockenen Oberflächen, die nicht den sog. "Froschgriff" (=froggy hand) aufweisen, ergeben.

Die erfindungsgemäß verwendeten Massen haben den Vorteil, daß sie nach der Vernetzung Vulkanisate mit nicht blockenden, gleitfähigen, nicht abrasiven und matten Oberflächen ergeben.

Des weiteren haben die erfindungsgemäß verwendeten Massen den Vorteil, daß sie einfach in der Herstellung sind und ausgezeichnet verarbeitbar sind.

Ferner haben die erfindungsgemäß verwendeten Massen den Vorteil, daß sie im wesentlichen frei von organischem Lösungsmittel sind.

Die erfindungsgemäßen verwendeten Massen haben den Vorteil, daß sie nach der Vulkanisation Oberflächen mit reduziertem Reibungskoeffizienten ergeben.

Das erfindungsgemäße Verfahren zur Herstellung von Beschichtungen hat den Vorteil, daß es sehr einfach in der Durchführung ist und in einem einzigen Arbeitsgang Beschichtungen hergestellt werden können.

Ferner hat das erfindungsgemäße Verfahren zur Herstellung von Beschichtung den Vorteil, daß bei der Vernetzung keine unerwünschten Lösungsmitteldämpfe entstehen.

Das erfindungsgemäße Verfahren zur Herstellung von Beschichtung hat des weiteren den Vorteil, daß zur Verarbeitung der erfindungsgemäßen Massen in der Textilbeschichtungsindustrie übliche Anlagen verwendet werden können.

In den nachstehend beschriebenen Beispielen beziehen sich alle Angaben von Teilen, falls nicht anders angegeben, auf das Gewicht. Sofern nicht anders angegeben, werden die nachstehenden Beispiele bei einem Druck der umgebenden Atmosphäre, also etwa bei 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

Im folgenden beziehen sich alle Viskositätsangaben auf eine Temperatur von 25°C.

Der Weiterreißwiderstand der Vulkanisate wird nach ASTM D624-B-91 bestimmt.

Die Shore-A-Härte wird nach DIN (Deutsche Industrie Norm) 53505-87 bestimmt.

Die Reißfestigkeit wird nach DIN 53504-85S1 bestimmt.

Die Reißdehnung wird nach DIN 53504-85S1 bestimmt.

LOI (limiting oxygen index = Sauerstoffindex) wird nach ASTM D2863-70 bestimmt.

Der Reibungskoeffizient wird nach ASTM D1894 bestimmt.

**Beispiel 1**

In einer Mischung aus 34,8 kg eines $\alpha,\omega$-Divinyldimethylpolysiloxans mit einer Viskosität von 20 000 mm$^2$/s und 50 kg eines $\alpha,\omega$-Divinyldimethylpolysiloxans mit einer Viskosität von 1 000 mm$^2$/s werden 15,2 kg einer hochdispersen Kieselsäure mit einer BET-Oberfläche von 300 m$^2$/g (käuflich erhältlich unter der Bezeichnung WACKER HDK® T30 bei der Wacker-Chemie GmbH, München) homogen verteilt. In die so erhaltene Masse werden 100 kg eines Aluminiumoxidpulvers mit einem mittleren Teilchendurchmesser von 1 $\mu$m und einer BET-Oberfläche von 10 m$^2$/g homogen eingearbeitet. Anschließend werden 4 kg eines Siloxans der Formel $(CH_3)_3SiO[SiO(CH_3)_2]_{3r}[SiO(CH_3)H]_rSi(CH_3)_3$ mit r gleich etwa 20 und 0,2 kg Ethinylcyclohexanol in dieser Mischung homogen verteilt. Nun werden 0,2 kg einer Lösung eines Platin-Tetramethyldivinyldisiloxan-Komplexes in Dimethylpolysiloxan mit einem Platingehalt dieser Lösung von 1 Gew.-% zugesetzt.

Mit der so erhaltenen Masse wird nun Glasgewebe beschichtet. Dabei wird mit einem Kastenrakel die Masse in einer Schichtdicke von 50 $\mu$m auf das Gewebe aufgerakelt und bei 150°C 3 Minuten in einem Umluftofen vernetzen gelassen.

Das so beschichtete Glasgewebe hat eine matte Oberfläche und weist einen trockenen Griff auf. Der Reibungskoeffizient des beschichteten Glasgewebes beträgt 0,8.

Des weiteren wird mit der so erhaltenen Masse ein Probekörper dadurch hergestellt, daß die Masse in eine den Prüfvorschriften entsprechende Form gegossen wird und die geschlossene Form in einem Umluftofen 15 Minuten bei 150°C getempert wird.

Der Probekörper zeigt die folgenden mechanischen Eigenschaften auf:

Shore-A-Härte: 64

Reißfestigkeit: 5,3 N/mm$^2$
Reißdehnung: 140 %
Weiterreißwiderstand: 7,3 N/mm
LOI: 34 %

**Vergleichsbeispiel 1**

Die in Beispiel 1 beschriebene Verfahrensweise wird wiederholt mit der Abänderung, daß kein Aluminiumoxidpulver eingesetzt wird.
Das so beschichtete Glasgewebe hat eine glänzende Oberfläche und weist einen für Flüssigsiliconkautschuke typischen froschartigen, blockenden Griff auf. Der Reibungskoeffizient des beschichteten Glasgewebes beträgt 1,3.
Der hergestellte Probekörper zeigt die folgenden mechanischen Eigenschaften auf:

Shore-A-Härte: 45
Reißfestigkeit: 4,8 N/mm$^2$
Reißdehnung: 230 %
Weiterreißwiderstand: 4,3 N/mm
LOI: 24 %

**Vergleichsbeispiel 2**

Die in Beispiel 1 beschriebene Verfahrensweise wird wiederholt mit der Abänderung, daß anstelle von 100 kg eines Aluminiumoxidpulvers mit einem mittleren Teilchendurchmesser von 1 um und einer BET-Oberfläche von 10 m$^2$/g 100 kg eines Aluminiumoxidpulvers mit einem mittleren Teilchendurchmesser von 40 um und einer BET-Ober-fläche von 2 m$^2$/g eingesetzt werden.
Das so beschichtete Glasgewebe hat eine matte Oberfläche und weist einen trockenen Griff auf. Die Oberfläche zeigt leicht abrasive Eigenschaften. Der Reibungskoeffizient des beschichteten Glasgewebes beträgt 0,7.
Der hergestellte Probekörper zeigt die folgenden mechanischen Eigenschaften auf:

Shore-A-Härte: 70
Reißfestigkeit: 2,7 N/mm$^2$
Reißdehnung: 50 %
Weiterreißwiderstand: 8,4 N/mm
LOI: 35 %

**Beispiel 2**

Die in Beispiel 1 beschriebene Verfahrensweise wird wiederholt mit der Abänderung, daß anstelle von 100 kg eines Aluminiumoxidpulvers mit einem mittleren Teilchendurchmesser von 1 µm und einer BET-Oberfläche von 10 m$^2$/g 100 kg eines Quarzmehls mit einem mittleren Teilchendurchmesser von 2 µm und einer BET-Oberfläche von 4 m$^2$/g eingesetzt werden.
Das so beschichtete Glasgewebe hat eine matte Oberfläche und weist einen trockenen Griff auf. Der Reibungskoeffizient des beschichteten Glasgewebes beträgt 0,8.
Der hergestellte Probekörper zeigt die folgenden mechanischen Eigenschaften auf:

Shore-A-Härte: 83
Reißfestigkeit: 4,8 N/mm$^2$
Reißdehnung: 70 %
Weiterreißwiderstand: 9,7 N/mm
LOI: 31 %

**Vergleichsbeispiel 3**

Die in Beispiel 1 beschriebene Verfahrensweise wird wiederholt mit der Abänderung, daß anstelle von 100 kg eines Aluminiumoxidpulvers mit einem mittleren Teilchendurchmesser von 1 µm und einer BET-Oberfläche von 10 m$^2$/g 100 kg eines Quarzmehls mit einem mittleren Teilchendurchmesser von 50 µm und einer BET-Oberfläche von 2 m$^2$/g eingesetzt werden.
Das so beschichtete Glasgewebe hat eine matte Oberfläche und weist einen trockenen Griff auf. Die Oberfläche zeigt abrasive Eigenschaften. Der Reibungskoeffizient des beschichteten Glasgewebes beträgt 0,9.

Der hergestellte Probekörper zeigt die folgenden mechanischen Eigenschaften auf:

Shore-A-Härte: 81
Reißfestigkeit: 5,2 N/mm$^2$
Reißdehnung: 50 %
Weiterreißwiderstand: 2,5 N/mm
LOI: 30 %

**Beispiel 3**

Die in Beispiel 1 beschriebene Verfahrensweise wird wiederholt mit der Abänderung, daß anstelle von 100 kg eines Aluminiumoxidpulvers mit einem mittleren Teilchendurchmesser von 1 μm und einer BET-Oberfläche von 10 m$^2$/g 100 kg eines Natriumaluminiumsilikates mit einem mittleren Teilchendurchmesser von 4 μm und einer BET-Oberfläche von 15 m$^2$/g mit der chemischen Zusammensetzung Na[AlSi$_3$O$_8$] eingesetzt werden.

Das so beschichtete Glasgewebe hat eine matte Oberfläche und weist einen trockenen Griff auf. Der Reibungskoeffizient des beschichteten Glasgewebes beträgt 0,9.

Der hergestellte Probekörper zeigt die folgenden mechanischen Eigenschaften auf:

Shore-A-Härte: 78
Reißfestigkeit: 3,3 N/mm$^2$
Reißdehnung: 73 %
Weiterreißwiderstand: 8,6 N/mm
LOI: 29 %

**Beispiel 4**

Die in Beispiel 1 beschriebene Verfahrensweise wird wiederholt mit der Abänderung, daß anstelle von 100 kg eines Aluminiumoxidpulvers mit einem mittleren Teilchendurchmesser von 1 μm und einer BET-Oberfläche von 10 m$^2$/g 100 kg der in Tabelle 1 angegebenen Komponente (Beispiel 4a Quarzmehl, 4b-d Aluminiumoxid, 4e-f Kreide) eingesetzt werden.

Die Ergebnisse in Bezug auf die Oberflächenbeschaffenheit und die mechanischen Eigenschaften finden sich in Tabelle 1.

Tabelle 1

| Beispiel | Füllstoff 6 | Korngröße [μm] | BET- Oberfläche [m$^2$/g] | Viskosität [mm$^2$/s] | Einfluß auf die mechanischen Eigenschaften und Oberfläche |
|---|---|---|---|---|---|
| 4a | SiO$_2$ | 8 | 15 | 140000 | leicht glänzend, gleitend |
| 4b | Al$_2$O$_3$ | 5 | 10 | 132000 | erfüllt die Anforderungen |
| 4c | Al$_2$O$_3$ | 2 | 5 | 123000 | leicht glänzend, gleitend erfüllt die Anforderungen |
| 4d | Al$_2$O$_3$ | 10 | 5 | 123000 | leicht glänzend, gleitend mechanisch etwas schwach |
| 4e | CaCO$_3$ | 10 | 15 | 145000 | Oberfläche leicht glänzend, kaum blockend |
| 4f | CaCO$_3$ | 5 | 12 | 128000 | Oberfläche leicht glänzend, schwach blockend |

**Vergleichsbeispiel 4**

Die in Beispiel 1 beschriebene Verfahrensweise wird wiederholt mit der Abänderung, daß anstelle von 100 kg eines Aluminiumoxidpulvers mit einem mittleren Teilchendurchmesser von 1 μm und einer BET-Oberfläche von 10 $m^2$/g 100 kg der in Tabelle 2 angegebenen Komponente (Beispiel V4a-b Quarzmehl, V4c-d Aluminiumoxid, V4e kalziniertes Kieselgur, V4f Bariumsulfat und V4g Talkum) eingesetzt werden.

Die Ergebnisse in Bezug auf die Oberflächenbeschaffenheit und die mechanischen Eigenschaften finden sich in Tabelle 2.

Tabelle 2

| Beispiel | Füllstoff 6 | Korngröße [μm] | BET- Oberfläche [$m^2$/g] | Viskosität [$mm^2$/s] | Einfluß auf die mechanischen Eigenschaften und Oberfläche |
|---|---|---|---|---|---|
| V4a | $SiO_2$ | 3 | 55 | 280000 (zu hoch) | glänzend, blockend |
| V4b | $SiO_2$ | 1 | 60 | 336000 (zu hoch) | glänzend, blockend |
| V4c | $Al_2O_3$ | 1 | 50 | 175000 | Oberfläche glänzend, blockend |
| V4d | $Al_2O_3$ | 60 | 5 | 118000 | stark abrasiv |
| V4e | $Si_4O_8 \cdot H_2O$ | n.a. | 70 | 320000 (zu hoch) | Oberfläche glänzend, etwas blockend |
| V4f | $BaSO_4$ | 30 | 3 | 116000 | glänzend, etwas blockend leicht abrasiv |
| V4g | $Mg_3[(OH)_2 Si_4O_{10}]$ | 0,5 | 80 | 420000 (zu hoch) | glänzend, nicht blockend schlechte Mechanik |

**Patentansprüche**

1. Verfahren zur Herstellung von Beschichtungen, dadurch gekennzeichnet, daß vernetzbare Organopolysiloxanmassen enthaltend

    (1) Organopolysiloxane, die SiC-gebundene Reste mit aliphatischen Kohlenstoff-Kohlenstoff-Mehrfachbindungen aufweisen,
    (2) Organopolysiloxane mit Si-gebundenen Wasserstoffatomen oder anstelle von (1) und (2)
    (3) Organopolysiloxane, die SiC-gebundene Reste mit aliphatischen Kohlenstoff-Kohlenstoff-Mehrfachbindungen und Si-gebundene Wasserstoffatome aufweisen,
    (4) die Anlagerung von Si-gebundenem Wasserstoff an aliphatische Mehrfachbindung fördernden Katalysator,
    (5) verstärkenden Füllstoff mit einer BET-Oberfläche von mehr als 50 $m^2$/g und
    (6) nicht verstärkenden Füllstoff mit einem mittleren Teilchendurchmesser von weniger als 20 μm und einer BET-Oberfläche von weniger als 20 $m^2$/g

    auf das Substrat, ausgewählt aus Silikonkautschuk, Holz und Textilien aufgetragen und bei einer Temperatur zwischen 20 und 280°C vernetzen gelassen wird.

2. Verfahren gemäß Anspruch 1, dadurch gekennzeichnet, daß als Organopolysiloxane (1) lineare oder verzweigte Organopolysiloxane aus Einheiten der Formel

$$R_a R^1_b SiO_{\frac{4-a-b}{2}} \qquad (I)$$

eingesetzt werden, wobei

R einen einwertigen, von aliphatischen Kohlenstoff-Kohlenstoff-Mehrfachbindungen freien, SiC-gebundenen, gegebenenfalls substituierten Kohlenwasserstoffrest mit 1 bis 18 Kohlenstoffatomen bedeutet,
$R^1$ einen einwertigen, SiC-gebundenen Kohlenwasserstoffrest mit aliphatischer Kohlenstoff-Kohlenstoff-Mehrfachbindung bedeutet,
a 0, 1, 2 oder 3 ist und
b 0, 1 oder 2 ist

mit der Maßgabe, daß die Summe a + b kleiner oder gleich 3 ist und mindestens 2 Reste $R^1$ je Molekül vorliegen.

3. Verfahren gemäß Anspruch 1 oder 2, dadurch gekennzeichnet, daß als Organopolysiloxane (2) lineare, cyclische oder verzweigte Organopolysiloxane aus Einheiten der Formel

$$R^2_g H_f SiO_{\frac{4-g-f}{2}} \qquad (III)$$

eingesetzt werden, wobei

$R^2$ die oben für Rest R angegebene Bedeutung hat,
g 0, 1, 2 oder 3 ist und
f 0, 1 oder 2 ist,

mit der Maßgabe, daß die Summe von g + f kleiner oder gleich 3 ist und mindestens 3 Si-gebundene Wasserstoffatome je Molekül vorliegen.

4. Verfahren gemäß einem oder mehreren der Ansprüche 1 bis 3, dadurch gekennzeichnet, daß das Gewichtsverhältnis von nicht verstärkendem Füllstoff (6) zu verstärkendem Füllstoff (5) 20:1 bis 2:1 beträgt.

5. Verfahren gemäß einem oder mehreren der Ansprüche 1 bis 4, dadurch gekennzeichnet, daß es sich bei den vernetzbaren Massen um solche handelt, die

(1) 10 bis 80 Gewichtsprozent Organopolysiloxane der Formel

$$R^1_x SiR_{3-x} O(SiR_2 O)_n (SiR^1 RO)_m SiR_{3-x} R^1_x \qquad (II),$$

wobei R und $R^1$ die oben dafür angegebene Bedeutung haben,

x 0, 1, 2 oder 3 bedeutet,
m 0 oder eine Zahl von 1 bis 50 ist und
n eine Zahl von 50 bis 100 000 ist,

mit der Maßgabe, daß die Siloxane der Formel (II) pro Molekül mindestens zwei Reste $R^1$ aufweisen und die n Einheiten $(SiR_2 O)$ sowie die m Einheiten $(SiR^1 RO)$ beliebig im Molekül verteilt sein können,
(2) 0,5 bis 20 Gewichtsprozent Organopolysiloxane aus Einheiten der Formel (III), mit der Maßgabe, daß die Summe von g + kleiner oder gleich 3 ist und mindestens 3 Si-gebundene Wasserstoffatome je Molekül vorliegen,
(4) Platinmetalle oder deren Verbindungen bzw. Komplexe in solchen Mengen, daß ein Platingehalt von 0,5 bis 500 Gewichts-ppm (= Gewichtsteile je Million Gewichtsteile), bezogen auf das Gesamtgewicht der erfindungsgemäßen Masse, resultiert,
(5) 5 bis 50 Gewichtsprozent verstärkenden Füllstoff mit einer BET-Oberfläche von mehr als 50 $m^2/g$ ,
(6) 10 bis 80 Gewichtsprozent nicht verstärkenden Füllstoff mit einem mittleren Teilchendurchmesser von weniger als 20 um und einer BET-Oberfläche von weniger als 20 m$^2$/g sowie
(7) 0,01 bis 3 Gewichtsprozent Inhibitor enthalten.

6. Verfahren nach einem oder mehreren der Ansprüche 1 bis 5, dadurch gekennzeichnet, daß es sich bei dem Substrat um Textilien handelt.

**Claims**

1. Process for preparing coatings characterized in that crosslinkable organopolysiloxane compositions comprising

   (1) organopolysiloxanes which contain SiC-bonded radicals with aliphatic carbon-carbon multiple bonds,
   (2) organopolysiloxanes with Si-bonded hydrogen atoms or, instead of (1) and (2)
   (3) organopolysiloxanes which contain SiC-bonded radicals with aliphatic carbon-carbon multiple bonds and Si-bonded hydrogen atoms,
   (4) a catalyst which promotes the addition of Si-bonded hydrogen onto an aliphatic multiple bond,
   (5) a reinforcing filler having a BET surface area of more than 50 m$^2$/g and
   (6) a non-reinforcing filler having an average particle diameter of less than 20 $\mu$m and a BET surface area of less than 20 m$^2$/g

   is [sic] applied to the substrate, selected from silicone rubber, wood and textiles, and is [sic] allowed to crosslink at a temperature between 20 and 280°C.

2. Process according to Claim 1, characterized in that the organopolysiloxanes (1) employed are linear or branched organopolysiloxanes of units of the formula

$$R_a R^1_b SiO_{\frac{4-a-b}{2}} \tag{I}$$

   in which

   R is a monovalent SiC-bonded, optionally substituted hydrocarbon radical which has 1 to 18 carbon atoms and is free from aliphatic carbon-carbon multiple bonds,
   R$^1$ is a monovalent SiC-bonded hydrocarbon radical with an aliphatic carbon-carbon multiple bond,
   a is 0, 1, 2 or 3 and
   b is 0, 1 or 2,

   with the proviso that the sum a + b is less than or equal to 3 and at least two radicals R$^1$ are present per molecule.

3. Process according to Claim 1 or 2, characterized in that the organopolysiloxanes (2) employed are linear, cyclic or branched organopolysiloxanes of units of the formula

$$R^2_g H_f SiO_{\frac{4-g-f}{2}} \tag{III}$$

   in which

   R$^2$ has the meaning given above for the radical R,
   g is 0, 1, 2 or 3 and
   f is 0, 1 or 2,

   with the proviso that the sum of g + f is less than or equal to 3 and at least 3 Si-bonded hydrogen atoms are present per molecule.

4. Process according to one or more of Claims 1 to 3, characterized in that the weight ratio of non-reinforcing filler (6) to reinforcing filler (5) is 20:1 to 2:1.

**5.** Process according to one or more of Claims 1 to 4, characterized in that the crosslinkable compositions are those which comprise

(1) 10 to 80% by weight of organopolysiloxanes of the formula

$$R^1{}_x SiR_{3-x} O(SiR_2 O)_n (SiR^1 RO)_m SiR_{3-x} R^1{}_x \qquad (II)$$

in which R and $R^1$ have the meaning given above for these radicals,

x is 0, 1, 2 or 3,
m is 0 or a number from 1 to 50 and
n is a number from 50 to 100,000,

with the proviso that the siloxanes of the formula (II) contain at least two radicals $R^1$ per molecule and the n units (SiR$_2$O) and the m units (SiR$^1$RO) can be distributed in the molecule as desired,
(2) 0.5 to 20 per cent by weight of organopolysiloxanes of units of the formula (III) with the proviso that the sum of g + f is less than or equal to 3 and at least 3 Si-bonded hydrogen atoms are present in the molecule,
(4) platinum metals or compounds or complexes thereof in amounts such that a platinum content of 0.5 to 500 ppm by weight (= parts by weight per million parts by weight), based on the total weight of the composition according to the invention, results,
(5) 5 to 50% by weight of reinforcing filler having a BET surface area of more than 50 m$^2$/g,
(6) 10 to 80% by weight of non-reinforcing filler having an average particle diameter of less than 20 $\mu$m and a BET surface area of less than 20 m$^2$/g and
(7) 0.01 to 3% by weight of inhibitor.

**6.** Process according to one or more of Claims 1 to 5, characterized in that the substrate is textiles.

**Revendications**

**1.** Procédé de préparation de revêtements, caractérisé en ce que des substances d'organopolysiloxanes réticulables contenant

(1) des organopolysiloxanes qui présentent des radicaux liés par SiC avec des liaisons aliphatiques carbone/carbone multiples,
(2) des organopolysiloxanes avec des atomes d'hydrogène liés au Si ou, au lieu de (1) et (2),
(3) des organopolysiloxanes qui présentent des radicaux liés par SiC, avec des liaisons aliphatiques carbone/carbone multiples et des atomes d'hydrogène liés au Si,
(4) un catalyseur favorisant la fixation d'hydrogène lié au Si sur liaison aliphatique multiple,
(5) une charge renforçante avec une surface BET supérieure à 50 m$^2$/g et
(6) une charge non renforçante avec un diamètre particulaire moyen inférieur à 20 $\mu$m et une surface BET inférieure à 20 m$^2$/g

sont appliquées sur le substrat, sélectionné parmi du caoutchouc de silicone, du bois et des textiles et se laissent réticuler à une température entre 20 et 280°C.

**2.** Procédé suivant la revendication 1, caractérisé en ce qu'on utilise comme organopolysiloxanes (1), des organopolysiloxanes linéaires ou ramifiés à partir d'unités de formule

$$R_a R^1{}_b SiO_{\frac{4-a-b}{2}} \qquad (I)$$

dans laquelle,

R signifie un radical hydrocarboné avec 1 à 18 atomes de carbone, lié par SiC, le cas échéant, substitué, monovalent, exempt de liaisons aliphatiques carbone/carbone multiples,

$R^1$ signifie un radical hydrocarboné monovalent, lié par SiC, avec liaison aliphatique carbone/carbone multiple,

a est 0, 1, 2 ou 3, et

b est 0, 1 ou 2

étant entendu que la somme de a + b est inférieure ou égale à 3 et qu'il existe au moins 2 radicaux $R^1$ par molécule.

3.  Procédé suivant la revendication 1 ou 2, caractérisé en ce qu'on utilise comme organopolysiloxanes (2) des organopolysiloxanes linéaires, cycliques ou ramifiés à partir d'unités de formule

$$R^2_g H_f SiO_{\frac{4-g-f}{2}} \qquad (III)$$

dans laquelle

$R^2$ a la signification donnée ci-dessus pour le radical R,

g est 0, 1, 2 ou 3 et

f est 0, 1 ou 2,

étant entendu que la somme de g + f est inférieure ou égale à 3 et qu'il existe au moins 3 atomes d'hydrogène liés au Si par molécule.

4.  Procédé suivant une ou plusieurs des revendications 1 à 3, caractérisé en ce que le rapport pondéral de la charge non renforçante (6) par rapport à la charge renforçante (5) s'élève à 20:1 jusqu'à 2:1.

5.  Procédé suivant une ou plusieurs des revendications 1 à 4, caractérisé en ce qu'il s'agit pour les substances réticulables, de substances qui contiennent

    (1) 10 à 80 pour cent en poids d'organopolysiloxanes de formule

$$R^1_x SiR_{3-x}O(SiR_2O)_n(SiR^1RO)_m SiR_{3-x}R^1_x \qquad (II)$$

dans laquelle R et $R^1$ ont la signification donnée pour cela ci-dessus,

x signifie 0, 1, 2 ou 3,

m est 0 ou un nombre de 1 à 50, et

n est un nombre de 50 à 100 000,

étant entendu que les siloxanes de formule (II) présentent au moins deux radicaux $R^1$ par molécule et que les n unités ($SiR_2O$) ainsi que les m unités ($SiR^1RO$) peuvent être réparties de façon quelconque dans la molécule,

(2) 0,5 à 20 pour cent en poids d'organopolysiloxanes à partir d'unités de formule (III), étant entendu que la somme de g + f est inférieure ou égale à 3 et qu'il existe au moins 3 atomes d'hydrogène liés au Si par molécule,

(4) des métaux de la famille du platine ou leurs composés ou, selon le cas des complexes en quantités telles, qu'il en résulte une teneur en platine de 0,5 à 500 ppm en poids (= parties en poids par million de parties en poids) sur base du poids total de la substance suivant l'invention,

(5) 5 à 50 pour cent en poids de charge renforçante avec une surface BET supérieure à 50 $m^2/g$,

(6) 10 à 80 pour cent en poids de charge non renforçante avec un diamètre particulaire moyen de moins de 20 μm et une surface BET de moins de 20 $m^2/g$ ainsi que

(7) 0,01 à 3 pour cent en poids d'inhibiteur.

6.  Procédé suivant une ou plusieurs des revendications 1 à 5, caractérisé en ce que pour le substrat, il s'agit de textiles.